**Europäisches Patentamt**

**European Patent Office**

**Office européen des brevets**

(11) Numéro de publication: **0 118 569**
**A2**

(12) **DEMANDE DE BREVET EUROPEEN**

(21) Numéro de dépôt: **82402406.1**

(22) Date de dépôt: **31.12.82**

(51) Int. Cl.³: **G 02 B 27/24**

(30) Priorité: **17.12.82 FR 8221225**

(43) Date de publication de la demande:
**19.09.84 Bulletin 84/38**

(84) Etats contractants désignés:
**AT BE CH DE GB IT LI NL SE**

(71) Demandeur: **COMPAGNIE DU MATERIEL DE MICROGRAPHIE "C.M.M."**
**1, rue de l'Ecluse**
**F-94100 Saint Maur(FR)**

(72) Inventeur: **Gresse, Hervé**
**34, rue Louis Pasteur**
**F-94100 Boulogne(FR)**

(72) Inventeur: **Carn, Annick**
**11, Avenue de Sceaux**
**F-78000 Versailles(FR)**

(74) Mandataire: **Peuscet, Jacques**
**3, Square de Maubeuge**
**F-75009 Paris(FR)**

(54) **Visionneuse stéréoscopique.**

(57) L'invention concerne une visionneuse stéréoscopique de photographies aériennes. Dans cette visionneuse, des moyens optiques permettent d'examiner simultanément à partir de deux oculaires les points homologues de deux photographies panoramiques successives du film (14) à examiner. Ces moyens optiques comportent, pour chaque chemin optique, d'une part, un jeu de miroirs-plans (320a, 320b; 321a, 321b; 322a, 322b; 323a, 323b; 324a, 324b) et, d'autre part, un système rotateur (325a, 325b) susceptible de faire tourner les images sensiblement autour de l'axe de visée de l'oeil (328a, 328b) correspondant, l'ensemble assurant un nombre pair de réflexions ; les moyens de réglage comportent des organes permettant le pivotement d'au moins un des deux systèmes rotateurs autour d'un axe fixe et/ou le déplacement d'au moins un des miroirs-plans.

EP 0 118 569 A2

./...

FIG. 8

1

# VISIONNEUSE STEREOSCOPIQUE

La présente invention concerne une visionneuse stéréoscopique destinée à l'examen simultané de deux images successives d'un film de prises de vue panoramiques produit notamment à partir d'un appareil de photographie aérienne.

Une visionneuse de ce genre est généralement placé au-dessus d'un support plan translucide sur lequel est disposé à plat le film de prises de vue panoramiques, un éclairage approprié étant placé en-dessous du support plan translucide. Elle comporte, de façon connue , entre deux objectifs tournés du côté du film à observer et deux oculaires, des moyens optiques permettant d'examiner simultanément deux images panoramiques successives du film, ainsi que des moyens de réglage permettant de déplacer l'une des deux images reçues par l'observateur par rapport à l'autre.

Une visionneuse stéréoscopique permet de regarder un film pris à partir d'une caméra portée par un avion. La caméra est orientée vers le bas et pendant la prise de vues, elle peut pivoter autour d'un axe parallèle à la direction d'avancement de l'avion. Ainsi, pour une prise de vue, la caméra est déplacée par rapport au pilote d'avion de gauche à droite ou de droite à gauche de façon que sur chacune des images panoramiques du film, on trouve aux extrémités d'une même image, dans le sens longitudinal du film; l'horizon droit et l'horizon gauche du paysage au-dessus duquel l'avion se déplace. Il s'ensuit que, pour un film de prises de vue panoramiques, les images impressionnées commencent toutes, dans un sens longitudinal du film, par l'horizon droit et, par suite, dans le sens longitudinal opposé, par l'horizon gauche. Pour regarder un tel film à l'aide d'un stéréoscope classique, il est nécessaire de le découper de façon à mettre deux images successives côte à côte transversalement, de façon que l'horizon droit de l'une soit adjacent à l'horizon droit de l'autre et que l'horizon gauche de l'une soit adjacent à l'horizon gauche de l'autre.

La visionneuse faisant l'objet du brevet des Etats Unis d'Amérique 4 221 462 permet d'éviter un tel découpage. Elle comporte des moyens permettant de déplacer transversalement l'une des deux images reçues par l'observateur par rapport à l'autre pour en obtenir le fusionnement. De tels moyens de réglage ont pour but de corriger la distorsion bien connue résultant du fait que, entre deux photographies successives, l'image d'un point situé à la verticale de l'avion, est déplacée transversalement dans le plan du film nettement plus vite que les images de points situés à l'horizon droit ou à l'horizon gauche. Ce déplacement relatif des points images qui est dû au mouvement de l'avion de prise de vue, est fonction de la vitesse et de la hauteur dudit avion. Dans le brevet susmentionné, le réglage du déplacement relatif des deux images selon la partie d'image examinée est obtenu par des moyens mécaniques complexes permettant un décalage progressif correspondant des deux objectifs de la visionneuse, l'écartement entre les deux objectifs passant par un maximum au moment où les deux objectifs sont disposés à l'aplomb du milieu des deux images panoramiques successives soumises à l'observation. Ce dispositif compliqué est d'une réalisation peu maniable.

La présente invention a pour but de remédier à l'inconvénient précité, et à cet effet, elle se propose de réaliser une visionneuse stéréoscopique du type ci-dessus indiqué autorisant un réglage de la position relative des deux images reçues par l'observateur qui soit particulièrement simple, à l'aide d'un nombre très réduit d'organes mécaniques peu compliqué.

Un autre objectif de l'invention est encore de fournir une visionneuse stéréoscopique qui soit pratique, sûre et d'un faible encombrement.

La présente invention a donc pour objet une visionneuse stéréoscopique de photographies aériennes, ladite visionneuse étant destinée à être placée au droit d'un film de prises de vue panoramiques à examiner, ledit film étant disposé à plat et étant convenablement éclairé, ladite visionneuse comportant, en premier lieu, des moyens optiques permettant d'examiner simultanément, à partir de deux oculaires
d'axes sensiblement parallèles, les points homologues de deux
photographies panoramiques successives du film à examiner,
lesdits moyens définissant un chemin optique entre chacune des
deux photographies précitées et l'un des yeux de l'observateur,
et en deuxième lieu, des moyens de réglage permettant de déplacer l'une des deux images reçues par l'observateur par
rapport à l'autre, caractérisé par le fait que les moyens
optiques comportent, pour chaque chemin optique, d'une part,
un jeu de miroirs-plans et, d'autre part, un système rotateur
susceptible de faire tourner les images sensiblement autour
de l'axe de visée de l'oeil correspondant, l'ensemble assurant
un nombre pair de réflexions et que les moyens de réglage
comportent des organes permettant le pivotement d'au moins
un des deux systèmes rotateurs autour d'un axe fixe et/ou le
déplacement d'au moins un des miroirs-plans.

Selon une réalisation avantageuse, le système rotateur d'images est un prisme à réflexion totale ; dans ce cas,
on préfère que chaque prisme soit un prisme droit ayant pour
base un triangle rectangle isocèle, les faces de réflexion
totale étant sensiblement perpendiculaires au plan du film à
examiner. Selon une autre réalisation, le système rotateur
d'images est un système dit "de Péchan" comportant deux prismes sur lesquels se font cinq réflexions. Quand le système
rotateur d'images est un prisme à réflexion totale, les moyens
de réglage comportent des organes permettant le pivotement
d'au moins un des deux prismes autour d'un axe parallèle à son
arête opposée à la face de réflexion totale ; dans le cas
d'un prisme droit à base isocèle rectangle, l'axe de pivotement est avantageusement confondu avec l'arête du dièdre
droit du prisme. Les axes des deux oculaires sont avantageusement disposés dans un plan sensiblement parallèle à l'axe
longitudinal du film à examiner.

On peut avantageusement prévoir d'éclairer le film
à examiner en le disposant sur un support-plan translucide associé à un moyen d'éclairement disposé du côté du support-plan où ne se trouve pas le film.

Il est clair que les organes de réglage mis en oeuvre dans l'invention sont bien plus simples que ceux utilisés dans le brevet des Etats Unis d'Amérique 4 221 462 pour entraîner le décalage mécanique transversal des deux objectifs de la visionneuse en fonction de leur position sur les deux images panoramiques successives examinées simultanément. En effet, selon l'invention, il suffit d'assurer le pivotement de l'un des deux systèmes rotateurs autour d'un axe et/ou le déplacement d'au moins un miroir-plan. C'est ainsi que, par exemple, l'axe de pivotement d'un système rotateur peut faire saillie à l'extérieur du boîtier de la visionneuse stéréoscopique et se terminer par un bouton de manoeuvre sur lequel peut agir l'observateur.

Quand on utilise, comme système rotateur d'images, un prisme, dont la face à réflexion totale est sensiblement perpendiculaire à l'axe longitudinal du film et que l'on fait tourner ce prisme par rapport à son arête opposée à la face de réflexion totale, on réalise un déplacement transversal de la zone examinée sur l'image correspondante du film et ceci permet donc de compenser le déplacement des points homologues sur deux images panoramiques successives. Au contraire, quand on fait tourner l'autre prisme autour de son arêt opposée à la face de réflexion totale et sensiblement parallèle à l'axe longitudinal du film, on réalise un déplacement selon l'axe du film de la zone examinée sur l'image correspondante du film, ce qui peut être utile si on modifie légèrement la longueur des images du film.

La distance entre les axes des deux oculaires de la visionneuse selon l'invention est réglée à l'écartement des yeux, c'est-à-dire à approximativement 65 mm. Dans ces conditions, les deux faisceaux incidents parallèles, qui viennent frapper les deux systèmes rotateurs, sont donc écartés d'environ 65 mm. Or, la visionneuse selon l'invention est utilisée pour l'examen de films dont la périodicité des images est nettement supérieure, par exemple de 250 mm ; les deux entrées des chemins optiques de la visionneuse se trouvent tournées vers deux images panoramiques successives du film et sont donc écartées l'une de l'autre d'une distance sensiblement égale à la périodicité précitée des images du film. Il convient donc de disposer entre les deux systèmes rotateurs et le film à examiner, un jeu de miroirs recevant les deux faisceaux incidents parallèles issus de deux points homologues de deux images successives du film et permettant de les renvoyer parallèlement avec un plus faible écartement sur les deux systèmes rotateurs.

Dans une première variante, un tel jeu de miroirs comporte, pour chacun des deux faisceaux incidents qu'il reçoit, successivement à partir du film à examiner :

- un premier miroir disposé à environ 45° par rapport au plan du film à examiner et perpendiculaire au plan de symétrie longitudinal du film, la surface réfléchissante dudit miroir étant tournée du côté dudit film ;

- un deuxième miroir recevant le faisceau réfléchi par le premier miroir, le plan du deuxième miroir étant perpendiculaire au plan du film à examiner et faisant un angle de 45° environ avec l'axe dudit film ;

- et un troisième miroir réfléchissant le faisceau qui provient du deuxième miroir et l'envoyant sur la face d'entrée de l'un des deux systèmes rotateurs.

Selon une autre caractéristique, les deuxièmes miroirs sont montés à pivotement autour d'un axe parallèle à l'arête d'intersection de leurs plans. Ceci permet un déplacement transversal des zones homologues examinées sur deux images successives. Un réglage transversal d'ensemble peut aussi être réalisé en déplaçant transversalement l'ensemble de la visionneuse par rapport au film. Ce positionnement transversal de la visionneuse peut être facilité par un système de potence ou, par un système de rail s'étendant transversalement par rapport au film et sur lequel est montée la visionneuse.

6

Les troisièmes miroirs sont avantageusement fixes et réunis en un seul élément dont la face réfléchissante forme un angle d'environ 135° par rapport au plan du film à examiner.

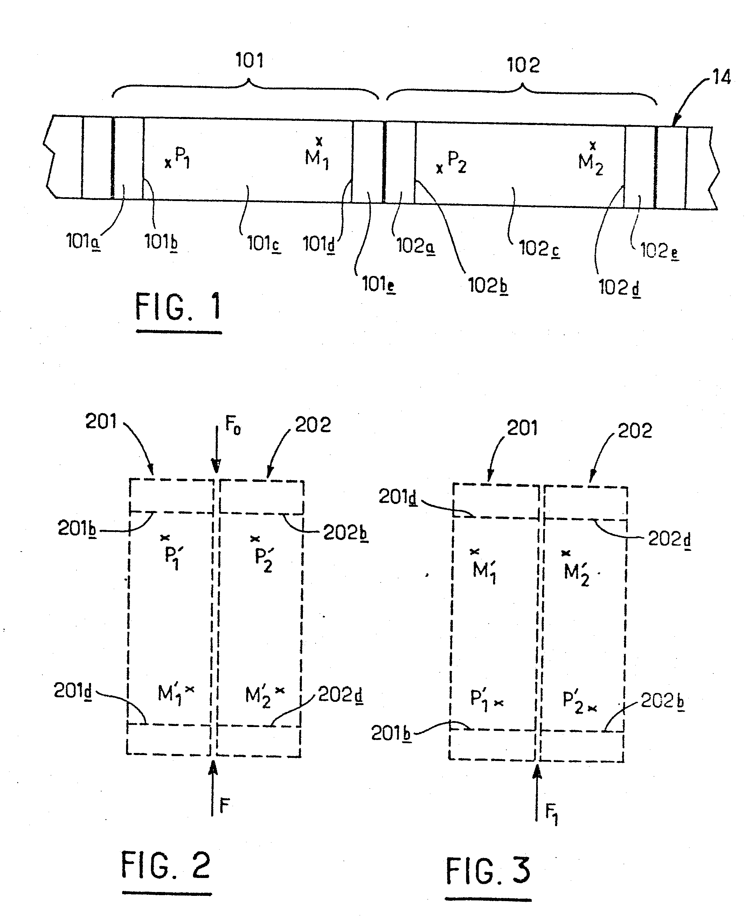

Dans une deuxième variante, on a cherché à perfectionner l'appareil de la première variante ; en effet, celui-ci présente un inconvénient que l'on va expliquer ci-après en se référant aux figures 1 et 2 du dessin annexé. La figure 1 représente un film de prises de vue panoramiques et l'on a désigné par 101 et 102 deux images successives de ce film. Sur chaque image, on trouve, en se déplaçant de la gauche vers la droite sur la figure 1, une zone de ciel désignée par l'indice $a$, l'horizon gauche désigné par l'indice $b$, la zone de photographie terrestre correspondant au balayage au droit de l'appareil de prises de vue désignée par l'indice $c$, l'horizon droit désigné par l'indice $d$ et enfin une zone de ciel désignée par l'indice $e$. Ces cinq éléments se retrouvent sur chacune des images successives du film dans l'ordre ci-dessus indiqué et sur la figure 1, on a ainsi repéré pour les images 101 et 102, les éléments $101a$, $101b$, $101c$, $101d$, $101e$ et $102a$, $102b$, $102c$, $102d$, $102e$. On a désigné par $M_1$ et $P_1$ deux points de la photographie 101 situés près de chacun des deux horizons et par $M_2$ et $P_2$ les deux points homologues de la photographie 102. Sur la figure 2, on a représenté les images 201, 202 vues par un observateur dans la visionneuse selon la première variante. Ces images 201, 202 des photographies 101 et 102 respectivement présentent les horizons gauches $201b$, $202b$ avec le ciel au-dessus de la ligne d'horizon, alors que l'inverse se produit pour les horizons droits $201d$ et $202d$. Il en résulte que l'observateur placé du côté de la visionneuse, où se trouve la flèche F, voit dans les oculaires une représentation normale, pour les images $P'_1$ et $P'_2$ des points $P_1$ et $P_2$ par rapport auxquels le ciel est positionné de façon normale, alors qu'il voit une représentation à l'envers pour les images $M'_1$ et $M'_2$ des points $M_1$ et $M_2$ par rapport auxquels le ciel est placé vers le bas.

Il est certain que, pour éliminer ce défaut, il suffit à l'observateur de changer de côté par rapport à l'axe du film ; mais il arrive souvent qu'une visionneuse soit disposée de telle façon que l'observateur ne puisse pas en faire le tour et qu'un seul poste d'observation soit disponible. Il en résulte que, dans ce cas, l'observateur voit de façon satisfaisante la moitié de la prise de vue et à l'envers l'autre moitié.

La seconde variante de réalisation a pour but de remédier à l'inconvénient précité en proposant une visionneuse qui comporte un dispositif permettant le retournement de l'image sans que l'observateur bouge de son poste. L'observateur examine ainsi la moitié du panorama avec une première position du dispositif de retournement et, avant d'examiner l'autre moitié, il procède au retournement de l'image pour bénéficier également sur cette autre moitié d'une vision à l'endroit.

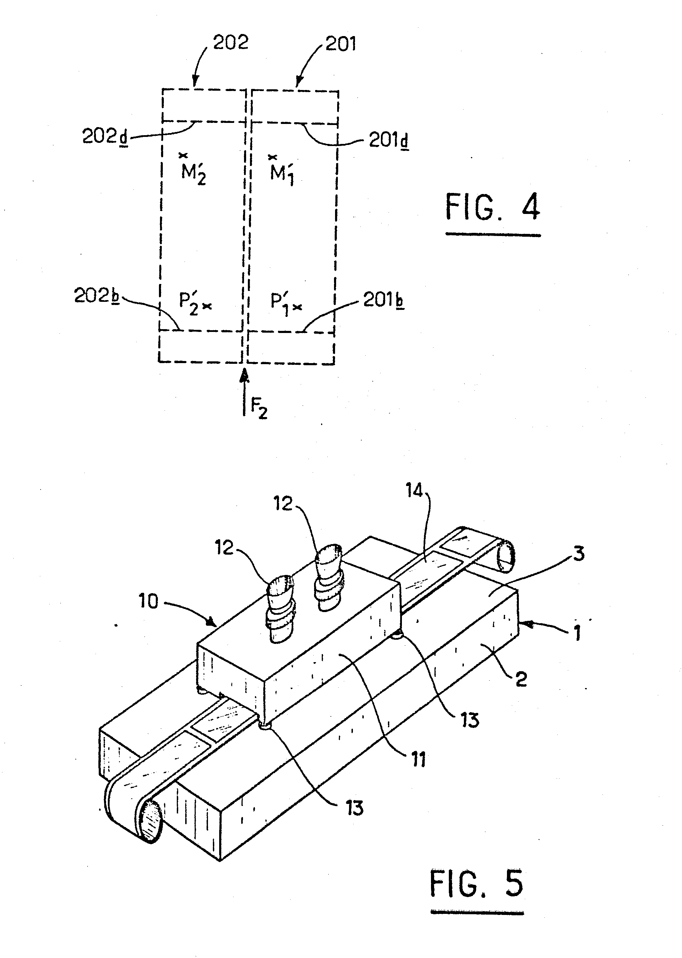

Il convient de remarquer que la visionneuse selon la première variante ne permettait pas d'obtenir ce résultat. En effet, il était possible de faire tourner chacun des deux prismes des deux chemins optiques de 90° autour d'un axe parallèle à la face de réflexion totale, afin de retourner l'image fournie par chacun des oculaires, mais dans ce cas, on obtient un résultat, qui est représenté sur la figure 3 : on voit que l'observateur, qui regarde en se mettant du côté où est la flèche $F_1$, voit avec son oeil droit le point $M'_2$ et avec son oeil gauche le point $M'_1$, alors qu'il aurait vu $M'_1$ avec son oeil droit et $M'_2$ avec son oeil gauche s'il s'était déplacé par rapport à la visionneuse de façon à réaliser l'examen du côté où figure la flèche $F_0$ sur la figure 2. La rotation des deux prismes de l'appareil selon la première variante assure un retournement de l'image en faisant voir à l'oeil droit, ce que l'oeil gauche devrait voir, et inversement ; dans ce cas, on obtient non pas une vision en relief stéréoscopique normal, mais une vision en relief stéréoscopique inversé, c'est-à-dire que l'on voit en creux ce qui est en saillie et inversement. Une telle solution ne donne pas satisfaction. La visionneuse selon la seconde variante permet, au contraire, d'obtenir un retournement complet de l'image comme représenté sur la figure 4, c'est-à-dire que l'observateur, positionné selon la flèche $F_2$ de la figure 4, voit exactement la même chose que l'observateur positionné selon la flèche $F_0$ pour les images non retournées de la figure 2.

Selon l'invention, la seconde variante de la visionneuse stéréoscopique est caractérisée par le fait qu'en premier lieu, les jeux de miroirs-plans associés à chacun des deux chemins optiques comportent chacun m miroirs, qui amènent les rayons provenant de deux points homologues de deux photographies panoramiques successives à tomber parallèlement mais en sens inverse sur deux miroirs de retournement parallèles, solidaires, placés dos à dos et susceptibles de pivoter de 90° autour d'un axe perpendiculaire aux rayons incidents ; et qu'en deuxième lieu, le jeu de miroirs de chaque chemin optique comporte l'un desdits miroirs de retournement suivi, le long du chemin optique, de p miroirs qui envoient les rayons, qui se sont réfléchis sur le miroir de retournement, vers le système rotateur associé à chaque oculaire, m et p étant des nombres entiers positifs.

Dans la visionneuse selon cette seconde variante, pour obtenir le retournement de l'image, on agit sur les systèmes rotateurs associés à chaque oculaire, ce qui donne un retournement tel que celui représenté sur la figure 3 par rapport à la position initiale représentée sur la figure 2 et on fait pivoter de 90° les deux miroirs de retournement autour de leur axe de pivotement, de sorte que les rayons qui allaient initialement à l'oculaire gauche viennent à l'oculaire droit et inversement, ce qui fait passer de la position d'image stéréoscopique représentée à la figure 3 à la position d'image stéréoscopique représentée à la figure 4. La visionneuse permet donc bien d'obtenir un retournement complet de l'image sans que l'on soit gêné par le phénomène de la stéréoscopie inversée.

Dans un mode préféré de réalisation de la seconde variante, le système rotateur d'images est un prisme à réflexion totale et (m + p) est un nombre pair ; l'axe de pivotement des deux miroirs de retournement est avantageusement perpendiculaire au plan du film à examiner ; pour éviter un encombrement trop important, la visionneuse, pour chaque chemin optique, comprend trois miroirs entre le film et le miroir de retournement, ces trois miroirs étant constitués successivement, à partir du film à examiner, en premier lieu, d'un premier miroir disposé sensiblement à 45° par rapport au plan du film, sensiblement perpendiculairement au plan de symétrie longitudinal du film, la surface réfléchissante dudit miroir étant tournée du côté dudit film, en deuxième lieu, d'un deuxième miroir recevant les rayons, qui se sont réfléchis sur le premier, ce deuxième miroir faisant un angle voisin de 45° avec l'axe longitudinal du film et un angle (90°+⍺) avec le plan du film à examiner, ⍺ ayant sensiblement la même valeur faible positive pour les deux chemins optiques, les plans des deuxièmes miroirs des deux chemins optiques ayant des traces sensiblement parallèles sur le plan du film à examiner, et en troisième lieu, d'un troisième miroir recevant les rayons, qui se sont réfléchis sur le deuxième et les envoyant sur le miroir de retournement, le plan de ce troisième miroir ayant une trace dans le plan du film à examiner, qui est sensiblement parallèle à l'axe du film et faisant avec le plan dudit film un angle voisin de (90° -⍺) pour amener les rayons réfléchis à être sensiblement parallèles au plan du film à examiner.

On peut avantageusement prévoir que, pour chaque chemin optique, la visionneuse selon cette deuxième variante comprend un seul miroir entre le miroir de retournement et l'oeil de l'observateur, ce quatrième miroir recevant les rayons du miroir de retournement ; les plans des miroirs de retournement sont sensiblement perpendiculaires au plan du film et leurs traces dans le plan du film font sensiblement 45° avec l'axe longitudinal du film ; les traces dans le plan du film des plans des quatrièmes miroirs sont sensiblement perpendiculaires à l'axe du film et les axes de visée correspondant aux deux yeux de l'observateur sont sensiblement perpendiculaires au plan du film.

En outre, on prévoit avantageusement des moyens pour le réglage en rotation des images reçues par l'observateur ; ces moyens comportent des organes permettant le pivotement des prismes autour d'un axe perpendiculaire à leurs arêtes opposées aux faces de réflexion totale.

Pour l'une ou l'autre des deux variantes, on peut prévoir, en outre, que l'un au moins des deux premiers miroirs soit monté à coulissement à l'intérieur d'une glissière de façon à pouvoir être déplacé par rapport à l'autre miroir selon l'axe longitudinal du film à examiner. Ainsi, grâce à cet agencement, la visionneuse selon l'invention peut être aisément réglée pour s'adapter à la longueur correspondant à la périodicité d'image de différents films en déplaçant plus ou moins celui des deux premiers miroirs, qui est monté à coulissement par rapport à l'autre.

Pour l'une ou l'autre des deux variantes, entre chaque système rotateur et l'un des yeux de l'observateur, on peut placer une lentille convergente renvoyant l'image reçue à l'infini, le foyer de ladite lentille se trouvant sur le film à examiner. On peut aussi prévoir de disposer, entre chaque lentille convergente et l'un des yeux de l'observateur, un ensemble afocal multiplicateur de grossissement;le coefficient de l'ensemble afocal utilisé peut être, par exemple, compris entre 2 à 8.Plus généralement, sur chaque chemin optique, on peut prévoir un ensemble de lentilles permettant d'augmenter le grossissement. Cette façon de procéder est particulièrement utile pour la visionneuse de la seconde variante car, par rapport à la visionneuse de la première variante,la longueur du chemin optique a été augmentée, ce qui entraîne

11

une diminution du grossissement ; l'objectif, associé éventuellement à une lentille de champ, fournit une image de la photographie aérienne examinée et l'oculaire permet de regarder ladite image.

Pour mieux faire comprendre l'objet de l'invention, on va en décrire maintenant, à titre d'exemples purement illustratifs et non limitatifs, deux modes de réalisation représentés sur le dessin annexé.

Sur ce dessin :

- la figure 1 représente un film de prises de vue panoramiques aériennes ;

- la figure 2 représente les images de deux photographies panoramiques successives du film, vues simultanément par l'oeil droit et l'oeil gauche de l'observateur pour l'obtention de la vision stéréoscopique ;

- la figure 3 représente les images de la figure 1 après un retournement dû uniquement au système rotateur de chacun des deux chemins optiques ;

- la figure 4 représente les images de la figure 2 après un retournement complet tel qu'obtenu par l'appareil selon la seconde variante ;

- la figure 5 représente une vue externe schématique de la visionneuse selon l'une ou l'autre des deux variantes de la visionneuse selon l'invention ;

- la figure 6 est une vue en plan agrandie d'une partie du film de la figure 5 ;

- la figure 7 représente, en perspective, le schéma de principe de la visionneuse stéréoscopique selon la première variante, montrant les éléments optiques qui la composent et leurs positions relatives ;

- la figure 8 représente, en perspective schématique, les différents éléments des deux chemins optiques de la visionneuse selon la deuxième variante.

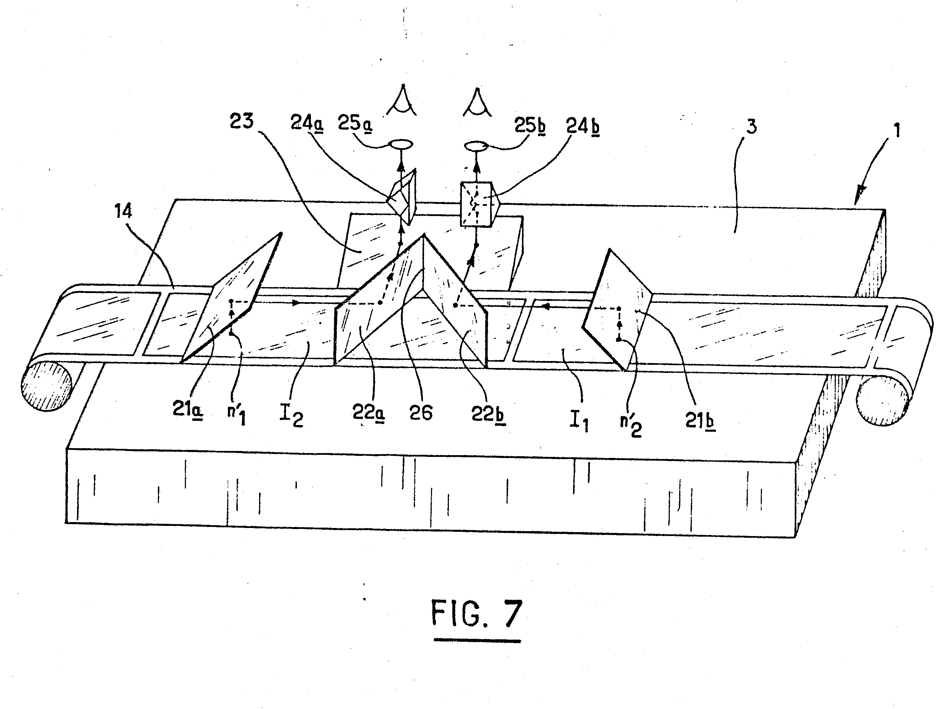

On se référera tout d'abord aux figures 5, 6, et 7 qui ont trait à la première variante de réalisation de la visionneuse selon l'invention.

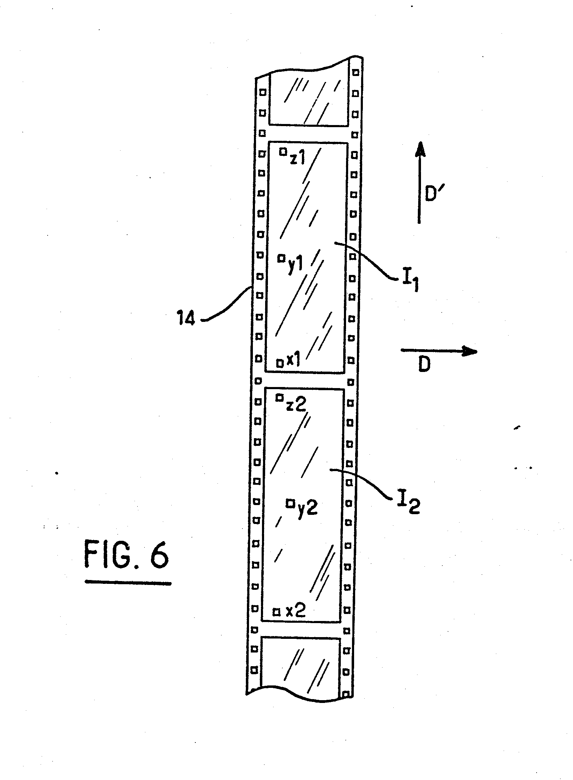

La figure 6 montre deux images photographiques $I_1$ et $I_2$ successives d'un film, qui a été pris par une caméra de prise de vue panoramique montée sur un avion. Pendant la prise de vue, l'avion se déplace selon la direction D, tandis que le film à l'intérieur de la caméra est déroulé selon la direction D'. La caméra est orientée vers le bas, et, au cours de la prise de vue, elle pivote dans un plan vertical autour d'un axe parallèle à la direction d'avancement D de l'avion. Ainsi, par rapport au pilote de l'avion ou à un observateur disposé dans la direction d'avancement D, la caméra va être déplacée pour une prise de vue, selon un mouvement de balayage allant de l'horizon droit à l'horizon gauche. En d'autres termes, pour chacune des images impressionnées $I_1$, $I_2$, la partie centrale correspond à la prise de vue opérée par la caméra alors qu'elle était pointée verticalement vers le bas, tandis que les bordures d'image perpendiculaires à l'axe du film correspondent chacune, au début ou à la fin de la course de balayage de la caméra, lorsque cette dernière était pointée sur l'horizon droit ou gauche. Si, sur l'image panoramique $I_1$, $x_1$ est un point image de l'horizon droit (par rapport au pilote de l'avion) $z_1$ qui est situé au voisinage de la bordure opposée est un point d'image de l'horizon gauche et $y_1$ situé sur l'axe médian transversal de l'image panoramique $I_1$ est le point image nadiral. A un point objet Z de l'horizon gauche correspond le point image $z_1$ de l'image panoramique $I_1$, et à ce même point objet Z correspond aussi le point image $z_2$ se trouvant sur l'image panoramique $I_2$ suivante. De même, aux points images $x_1$ et $y_1$ de $I_1$ correspondent des points images $x_2$ et $y_2$ de $I_2$ : on dit que $x_1$ et $x_2$, $y_1$ et $y_2$, $z_1$ et $z_2$ sont des points homologues de deux images successives, correspondant respectivement à des points objet X, Y, Z de l'espace photographié.

On sait que, si le vol s'effectue en direction de la flèche D, l'image d'un point objet disposé à l'horizon ne se déplace pratiquement pas transversalement dans le plan du film, quand on passe d'une image à la suivante, alors que l'image d'un point objet situé à la verticale de l'avion, c'est-à-dire au nadir, se déplace transversalement dans le plan du film sur une distance non négligeable ; il en résulte une distorsion transversale fonction de la hauteur et de la vitesse de l'avion. Ainsi, comme on l'a illustré sur la figure 6, on observe que l'écartement transversal séparant les points images homologues $y_1$ et $y_2$ est nettement plus grand que l'écartement transversal séparant deux points images homologues ---------------------------------------------------------------- $x_1-x_2$ ou $z_1-z_2$ situés respectivement sur l'horizon droit ou gauche, ce dernier écartement étant pratiquement négligeable.

Sur la figure 5, on a désigné par 1 une table lumineuse de type connu, comportant une paroi latérale 2 surmontée par une plaque de verre translucide horizontale 3 ; un éclairage (non représenté) est placé sous cette plaque de verre.

Un film de prises de vue panoramiques 14 à examiner est déroulé et appliqué à plat sur la plaque de verre translucide 3 au moyen d'organes classiques qui n'ont pas été représentés. Dans cet exemple de réalisation, la longueur des images du film est de 250mm ; l'appareil de prise de vue mis en oeuvre est une caméra connue sous la désignation "OMERA 40".

Une visionneuse stéréoscopique 10 vient, dans cet exemple, directement en appui sur la plaque de verre translucide 3 de la table lumineuse 1 ; elle est disposée à cheval sur le film 14 et, pour ce faire, son boîtier 11 est supporté par quatre pieds en caoutchouc 13 à faible hauteur au-dessus de la plaque de verre translucide 3 ; le boîtier 11 est surmonté par deux oculaires 12, dont l'écartement est réglable pour s'adapter à l'écart pupilaire de l'observateur. Les axes parallèles des deux oculaires 12 sont disposés selon un plan parallèle à l'axe longitudinal du film à examiner, alors que,

14

dans le brevet des Etats Unis d'Amérique 4 221 462, le plan des axes des deux lunettes d'observation de la visionneuse était agencé perpendiculairement à l'axe du film. La disposition des axes des oculaire 12, dans un plan parallèle à l'axe du film, constitue une caractéristique intéressante, car l'observateur se trouve ainsi placé par rapport à chaque image panoramique du film de la même façon que le pilote de l'avion par rapport au paysage ayant fait l'objet des prises de vue. Ainsi, la partie de chaque image panoramique située à gauche de l'observateur correspond à la partie du paysage située à gauche du pilote, ce qui, bien entendu, facilite le repérage.

Sur la face inférieure du boîtier 11, qui est adjacente et parallèle à la plaque de verre translucide 3, sont pratiquées deux ouvertures constituant les entrées des deux chemins optiques de la visionneuse 10, qui sont affectés à deux images panoramiques successives $I_1$ et $I_2$ à examiner. Au droit de chacune des ouvertures précitées est placé un miroir 21a, 21b respectivement ; les deux miroirs 21a, 21b sont disposés symétriquement par rapport à un plan vertical perpendiculaire au plan du film à examiner, leurs surfaces réfléchissantes étant tournées l'une vers l'autre ; ils sont chacun disposés à 45° par rapport au plan du film et l'arête d'intersection de leurs plans est perpendiculaire à l'axe longitudinal du film.

On a désigné par $n'_1$ et $n'_2$ les projections des centres des deux miroirs 21a, 21b sur le plan du film ; l'écartement entre les deux projections $n'_1$ et $n'_2$ est sensiblement égal à la longueur des images panoramiques du film 14 et, par conséquent, nettement supérieur à l'écartement entre les deux oculaires 12.

Les deux miroirs 21a et 21b sont avantageusement montés sur des glissières longitudinales (non représentées) à l'intérieur du boîtier 11, de façon à pouvoir ajuster leur écartement en fonction de la longueur des images panoramiques de différents films.

15

Entre les deux miroirs 21a et 21b sont placés deux autres miroirs 22a, 22b symétriques par rapport au plan de symétrie vertical des deux miroirs 21a, 21b ; chaque miroir 22a, 22b est disposé dans un plan vertical faisant un angle de 45° par rapport à l'axe longitudinal du film 14. Les deux miroirs 22a, 22b forment un dièdre droit ayant une arête verticale 26 ; les deux miroirs 22a, 22b sont avantageusement montés à pivotement autour d'un axe passant par leur arête verticale commune 26 de façon à pouvoir faire varier légèrement l'angle de 45° qu'ils font avec l'axe du film à examiner, tout en conservant le même plan de symétrie.

Les rayons lumineux renvoyés par les miroirs 21a, 21b sont réfléchis par les deux miroirs associés 22a, 22b et renvoyés sur un miroir commun 23 fixe, dont la face réfléchissante fait un angle de 135° par rapport au plan du film 14. Le miroir 23 reçoit deux faisceaux lumineux parallèles réfléchis par la paire de miroirs 22a, 22b et les renvoie verticalement vers le haut en direction de deux prismes 24a, 24b.

Il y a lieu d'observer que les miroirs 21a, 21b, 22a, 22b et le miroir commun 23 constituent un système optique permettant de rapprocher les deux faisceaux lumineux incidents provenant des deux parties d'images examinées et qui sont écartés l'un de l'autre d'environ 250mm, de façon que ces deux faisceaux, à la sortie du système, ne soient distants que d'environ 65mm, valeur qui correspond à l'écartement moyen des yeux d'un observateur.

Les deux prismes 24a et 24b sont des prismes droits identiques disposés de part et d'autre du plan de symétrie vertical des miroirs 21a, 21b, 22a, 22b. La base des prismes 24a, 24b est un triangle rectangle isocèle; leurs deux faces hypoténuses sont placées perpendiculairement au plan du film 14 ; elles font entre elles un angle de 90°. La face hypoténuse du prisme 24a est perpendiculaire à l'axe longitudinal du film 14.

Pour chaque prisme 24a, 24b, les rayons lumineux

16

réfléchis par le miroir 23 pénètrent par l'une des deux faces du dièdre droit, sont réfléchis par la face hypoténuse et sortent par l'autre face du dièdre droit. Les rayons lumineux qui traversent les deux prismes 24a, 24b, ne subissent aucune déviation. A la sortie des deux prismes 24a, 24b, on obtient deux faisceaux émergents verticaux ayant le même écartement que les deux faisceaux verticaux incidents ; ces faisceaux sont dirigés, chacun sur une lentille convergente 25a, 25b placée à l'intérieur des oculaires 12. Les deux lentilles convergentes 25a, 25b renvoient l'image à l'infini, leur foyer étant disposé dans le plan du film 14 en tenant compte du chemin optique.

Enfin, le système optique de la visionneuse stéréoscopique peut être complété par deux ensembles afocaux multiplicateurs de grossissement (non représentés) placés entre les lentilles convergentes 25a, 25b et les yeux de l'observateur. Le grossissement des ensembles utilisés peut aller de 2 à 8.

L'un des éléments caractéristiques essentiels de la visionneuse stéréoscopique 10 réside dans la facilité de réglage transversal relatif des deux images reçues par l'observateur : en effet, pour annuler, pour la zone observée, le décalage transversal des points homologues des deux images examinées, l'observateur modifie l'inclinaison de la face hypoténuse du prisme 24a en le faisant pivoter autour de son arête horizontale opposée. Cette variation de l'inclinaison du prisme P peut être réalisée par des moyens mécaniques très simples, tels qu'un axe disposé selon l'arête dudit prisme et solidaire du prisme, cet axe se prolongeant, par exemple, à l'extérieur du boîtier 11 par un bouton de manoeuvre. On déplace ainsi sur le film la zone d'image observée à travers le prisme 24a alors que celle observée à travers 24b reste fixe, ce qui permet de compenser le décalage transversal des points homologues.

Le réglage transversal d'ensemble de la visionneuse stéréoscopique par rapport au film, c'est-à-dire le réglage transversal simultané des deux images reçues par l'observateur peut, bien entendu, être obtenu en déplaçant transversa-

17

lement la visionneuse 10 par rapport au film. On peut également obtenir un réglage transversal en faisant légèrement pivoter les miroirs associés 22a, 22b autour d'un axe parallèle à leur arête d'intersection 26.

Au contraire, une rotation du prisme 24b autour de son arête opposée à la face hypoténuse produit un déplacement longitudinal de la zone observée à travers ce prisme 24b ce qui peut permettre de compenser une faible variation de la longueur des images successives.

On va décrire maintenant une seconde variante de la visionneuse selon l'invention. La réprésentation extérieure de cette visionneuse est celle de la figure 5 et la description externe de l'appareil ne sera donc pas reprise. Le film de prises de vue utilisé est le même que celui décrit pour la première variante.

Au droit de chacune des ouvertures du boîtier 11, qui constituent les entrées des deux chemins optiques de la visionneuse est placé un miroir-plan 320a, 320b respectivement ; les deux miroirs 320a, 320b sont disposés symétriquement par rapport à un plan vertical perpendiculaire au plan du film à examiner et perpendiculaire à l'axe dudit film ; les surfaces réfléchissantes des deux miroirs 320a, 320b sont tournées l'une vers l'autre, ces deux miroirs étant disposés à 45° par rapport au plan du film 14.

Un rayon qui part d'un point du film 14 perpendiculairement à ce film se réfléchit sur l'un des premiers miroirs 320a, 320b et est ramené vers le centre de la visionneuse où il rencontre un deuxième miroir-plan 321a ou 321b. Ces deuxièmes miroirs sont dans des plans, qui coupent le plan du film 14 selon des traces parallèles faisant un angle de 45° avec l'axe du film 14. Les plans de chacun des miroirs 321a et 321b font avec le plan du film 14, un angle de 95°, cet angle étant décompté entre la face réfléchissante du miroir et le demi-plan du film où se trouve le premier miroir correspondant. Les deux deuxièmes miroirs forment entre eux

18

un angle dièdre de 10°. Etant donné que les miroirs 321a et 321b ne sont pas perpendiculaires au plan du film, mais au contraire légèrement inclinés vers le haut, la réflexion des rayons provenant des premiers miroirs s'effectue avec un changement de niveau, le rayon réfléchi sur le deuxième miroir étant dirigé vers le haut c'est-à-dire s'écartant du film 14. Ce rayon rencontre alors un troisième miroir-plan 322a, 322b respectivement. Les plans des troisièmes miroirs coupent le plan du film 14 selon des droites parallèles à l'axe du film 14 ; les plans des deux troisièmes miroirs forment avec le plan du film 14, un angle d'environ 85°, les faces réfléchissantes étant légèrement inclinées vers le bas, c'est-à-dire vers le film 14. L'inclinaison des miroirs 322a et 322b ramène le rayon qui provient des deuxièmes miroirs dans un plan parallèle au plan du film 14. Les faisceaux sortant des troisièmes miroirs sont donc horizontaux et dirigés, pour les deux chemins optiques, vers le plan longitudinal médian du film 14.

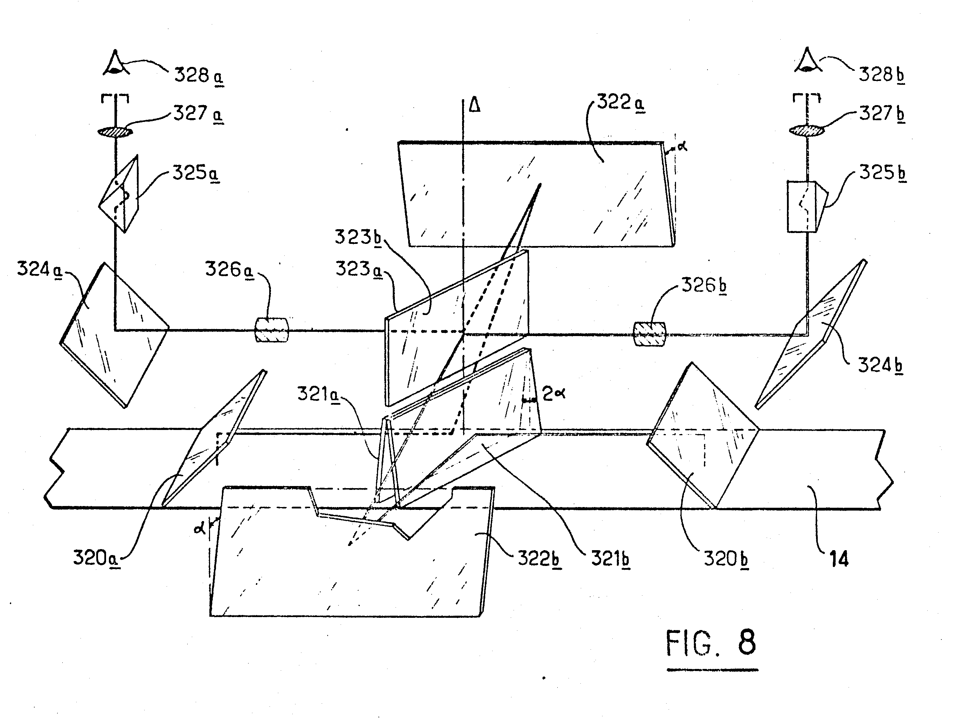

L'ensemble du jeu de miroirs, qui vient d'être décrit, est symétrique par rapport à la perpendiculaire commune à l'axe longitudinal du film, d'une part, et l'arête du dièdre formée par les deuxièmes miroirs 321a, 321b d'autre part : on a désigné par Δ cette perpendiculaire commune. On dispose, pivotants autour de l'axe Δ, deux miroirs-plans de retournement 323a, 323b, qui sont montés sur un même équipage mobile et qui sont accolés dos à dos. Les deux miroirs de retournement 323a, 323b reçoivent les rayons respectivement des troisièmes miroirs 322a, 322b et ils les renvoient respectivement vers un quatrième miroir-plan 324a, 324b. Les miroirs de retournement 323a, 323b sont perpendiculaires au plan du film 14 et forment un angle de 45° avec l'axe longitudinal du film 14; l'équipage mobile qui les porte est susceptible de prendre deux positions à 90° l'une de l'autre. Pour l'une des positions, représentée sur la figure 8, le miroir 323b renvoie le faisceau lumineux venu de 322b sur le miroir 324b;

pour l'autre position, le miroir 323a renvoie le faisceau lumineux venu de 322b, sur le miroir 324a. Les quatrièmes miroirs 324a, 324b font un angle de 45° avec le plan du film 14, les faces réfléchissantes étant dirigées vers le haut ; les traces des plans correspondants sur le plan du film font un angle droit avec l'axe longitudinal du film.

Après chacun des quatrièmes miroirs 324a, 324b, on trouve, sur chaque chemin optique, un prisme à réflexion totale 325a, 325b : ce prisme est un prisme droit à base isocèle rectangle qui peut tourner, d'une part, autour d'un axe passant par la face hypoténuse et perpendiculaire au plan du film 14 et, d'autre part, autour d'un axe disposé selon l'arête opposée à la face hypothénuse où s'effectue la réflexion totale, ladite arête étant parallèle au plan du film 14. Le réglage de l'appareil est tel que les faces hypoténuses sont sensiblement perpendiculaires au plan du film 14.

Sur chaque chemin optique, entre le miroir de retournement et le quatrième miroir, on a interposé un objectif convergent 326a, 326b qui fournit du film examiné une image que l'on regarde à travers un oculaire 327a, 327b disposée sur chaque chemin optique entre le prisme 325a, 325b et les yeux 328a, 328b de l'observateur.

Quand un observateur examine un film 14 dans la visionneuse qui vient d'être décrite, il a une vision stéréoscopique et il peut voir tout le panorama à l'endroit, c'est-à-dire avec le ciel placé en position haute. En effet, si l'observateur fait tourner de 90° l'équipage mobile des miroirs de retournement 323a, 323b, il passe des images représentées sur la figure 2 aux images représentées sur la figure 4. Par rapport à l'image représentée sur la figure 2, celle représentée sur la figure 4 correspond à un retournement complet de 180°, de sorte que l'observateur, sans se déplacer et sans déplacer le film peut avoir une vision stéréoscopique à l'endroit de la moitié du panorama qu'il voyait précédemment à l'envers.

20

La présence, sur chaque chemin optique, des systèmes de lentilles 326a, 327a ou 326b, 327b permet d'obtenir un grossissement de 2 à 8, bien que les chemins optiques aient été rallongés par rapport au dispositif décrit dans la première variante.

Comme indiqué pour la première variante, l'un des avantages de la visionneuse selon l'invention réside dans la facilité du réglage transversal relatif des deux images reçues par l'observateur : en effet, pour annuler, pour la zone observée, le décalage transversal des points homologues de deux images examinées, l'observateur modifie l'inclinaison de la face hypoténuse de l'un des prismes 325a ou 325b en le faisant pivoter autour de son arête horizontale opposée à la face hypoténuse. Cette variation de l'inclinaison des prismes peut être réalisée par des moyens mécaniques très simples tels qu'un axe disposé selon l'arête dudit prisme et solidaire du prisme, cet axe se prolongeant à l'extérieur du boîtier 311 par un bouton de manoeuvre.

Le réglage transversal d'ensemble de la visionneuse par rapport au film est obtenu en déplaçant transversalement la visionneuse par rapport audit film.

Le réglage de l'angle formé par les faces hypoténuses des deux prismes 325a, 325b permet un réglage angulaire relatif des deux images formant la vision stéréoscopique.

Il est bien entendu que les modes de réalisation ci-dessus décrits ne sont aucunement limitatifs et pourront donner lieu à toutes modifications désirables, sans sortir pour cela du cadre de l'invention. En particulier, les réglages peuvent être obtenus en agissant non sur les prismes mais sur au moins un des miroirs et notamment, pour la deuxième variante, en agissant sur les miroirs de retournement. De façon générale, l'un au moins des miroirs-plans de la visionneuse selon l'invention peut pivoter autour d'une droite parallèle à son plan ou contenue dans son plan.

## Revendications

1 - Visionneuse stéréoscopique de photographies aériennes, ladite visionneuse étant destinée à être placée au droit d'un film de prises de vue panoramiques à examiner, ledit film étant disposé à plat et étant convenablement éclairé, ladite visionneuse comportant, en premier lieu, des moyens optiques permettant d'examiner simultanément, à partir de deux oculaires d'axes sensiblement parallèles, les points homologues de deux photographies panoramiques successives du film à examiner, lesdits moyens définissant un chemin optique entre chacune des deux photographies précitées et l'un des yeux de l'observateur et, en deuxième lieu des moyens de réglage permettant de déplacer l'une des deux images reçues par l'observateur par rapport à l'autre, caractérisée par le fait que les moyens optiques comportent, pour chaque chemin optique, d'une part, un jeu de miroirs-plans (21a,21b,22a,22b,23 ; 320a,320b,321a,321b,322a,322b, 323a,323b,324a,324b) et, d'autre part, un système rotateur (24a,24b ; 325a,325b) susceptible de faire tourner les images sensiblement autour de l'axe de visée de l'oeil correspondant, l'ensemble assurant un nombre pair de réflexions et que les moyens de réglage comportent des organes permettant le pivotement d'au moins un des deux systèmes rotateurs autour d'un axe fixe et/ou le déplacement d'au moins un des miroirs-plans.

2 - Visionneuse selon la revendication 1, caractérisée par le fait que le système rotateur d'images est un prisme à réflexion totale.

3 - Visionneuse selon la revendication 1, caractérisée par le fait que le système rotateur d'images est un système de Péchan à deux prismes.

2 2

4 - Visionneuse selon la revendication 2, caractérisée par le fait que les moyens de réglage comportent des organes permettant le pivotement d'au moins un des deux prismes autour d'un axe parallèle à son arête opposée à la face de réflexion totale.

5 - Visionneuse selon l'une des revendications 1 à 4, caractérisée par le fait que les axes des deux oculaires (12) sont disposés dans un plan sensiblement parallèle à l'axe longitudinal du film (14) à examiner.

6 - Visionneuse selon l'une des revendications 1 à 5, caractérisée par le fait que le film (14) à examiner est posé sur un support-plan translucide (3) associé à un moyen d'éclairement disposé du côté du support-plan où ne se trouve pas le film (14).

7 - Visionneuse selon l'une des revendications 1 à 6, caractérisée par le fait que le jeu de miroirs comporte, pour chacun des deux faisceaux incidents qu'il reçoit, successivement à partir du film (14) à examiner :

- un premier miroir (21a, 21b) disposé à environ 45° par rapport au plan du film (14) à examiner et perpendiculaire au plan de symétrie longitudinal du film, la surface réfléchissante dudit miroir étant tournée du côté dudit film ;

- un deuxième miroir (22a, 22b) recevant le faisceau réfléchi par le premier miroir, le plan du deuxième miroir étant perpendiculaire au plan du film à examiner et faisant un angle de 45° environ avec l'axe dudit film ;

- et un troisième miroir (23) réfléchissant le faisceau qui provient du deuxième miroir et l'envoyant sur la face d'entrée de l'un des deux systèmes rotateurs (24a, 24b).

8 - Visionneuse selon les revendications 2 et 7 prises simultanément, caractérisée par le fait que les faces à réflexion totale des prismes sont sensiblement perpendiculaires entre elles et au plan du film à examiner.

9 - Visionneuse selon l'une des revendications 7 ou 8, caractérisée par le fait que les deuxièmes miroirs (22a, 22b) sont montés à pivotement autour d'un axe parallèle à l'arête d'intersection de leur plans.

10 - Visionneuse selon l'une des revendications 7 à 9, caractérisée par le fait que les troisièmes miroirs sont fixes et réunis en un seul élément (23) dont la face réfléchissante forme un angle d'environ 135° par rapport au plan du film (14) à examiner.

11 - Visionneuse selon l'une des revendications 1 à 6, caractérisée par le fait qu'en premier lieu, les jeux de miroirs-plans associés à chacun des deux chemins optiques comportent chacun m miroirs (320a, 320b, 321a, 321b, 322a, 322b), qui amènent les rayons provenant de deux points homologues de deux photographies panoramiques successives à tomber parallèlement mais en sens inverse sur deux miroirs de retournement (323a, 323b) parallèles, solidaires, placés dos à dos et susceptibles de pivoter de 90° autour d'un axe (Δ) perpendiculaire aux rayons incidents ; et qu'en deuxième lieu, le jeu de miroirs de chaque chemin optique comporte l'un desdits miroirs de retournement (323a, 323b) suivi, le

24

long du chemin optique, de p miroirs (324$\underline{a}$,324$\underline{b}$) qui renvoient les rayons, qui se sont réfléchis sur le miroir de retournement, vers le système rotateur (325$\underline{a}$,325$\underline{b}$) associé à chaque oculaire , m et p étant des nombres entiers positifs.

12 - Visionneuse selon les revendications 2 et et 11 prises simultanément, caractérisée par le fait que (m + p) est un nombre pair.

13 - Visionneuse selon l'une des revendications 11 ou 12, caractérisée par le fait que l'axe de pivotement des deux miroirs de retournement (323$\underline{a}$,323$\underline{b}$) est perpendiculaire au plan du film (14) à examiner.

14 - Visionneuse selon l'une des revendications 11 à 13, caractérisée par le fait,que pour chaque chemin optique,le jeu de miroirs-plans comprend trois miroirs (320$\underline{a}$,320$\underline{b}$,321$\underline{a}$,321$\underline{b}$,322$\underline{a}$,322$\underline{b}$) entre le film (14) et le miroir de retournement (323$\underline{a}$,323$\underline{b}$), ces trois miroirs étant constitués successivement à partir du film (14) à examiner, en premier lieu, d'un premier miroir (320$\underline{a}$, 320$\underline{b}$) disposé sensiblement à 45° par rapport au plan du film (14), sensiblement perpendiculairement au plan de symétrie longitudinal du film, la surface réfléchissante dudit miroir étant tournée du côté dudit film, en deuxième lieu, d'un deuxième miroir (321$\underline{a}$,321$\underline{b}$) recevant les rayons qui se sont réfléchis sur le premier, ce deuxième miroir faisant un angle voisin de 45° avec l'axe longitudinal du film (14) et un angle (90° + $\alpha$) avec le plan du film (14) à examiner, $\alpha$ ayant sensiblement la même valeur faible positive pour les deux chemins optiques, les plans des deuxièmes miroirs (321$\underline{a}$,321$\underline{b}$ des deux chemins optiques ayant des traces sensiblement parallèles sur le plan du film (14)

0118569

25

à examiner et, en troisième lieu, d'un troisième miroir (322a,322b) recevant les rayons qui se sont réfléchis sur le deuxième et les envoyant sur le miroir de retournement (323a,323b), le plan de ce troisième miroir ayant une trace dans le plan du film à examiner qui est sensiblement parallèle à l'axe du film et faisant avec le plan dudit film un angle voisin de (90° - α) pour amener les rayons réfléchis à être sensiblement parallèles au plan du film (14) à examiner.

15 - Visionneuse selon l'une des revendications 11 à 14 , caractérisée par le fait qu'elle comprend un seul miroir (324a,324b) entre le miroir de retournement (323a, 323b) et l'oculaire     , ce quatrième miroir recevant les rayons du miroir de retournement.

16 - Visionneuse selon la revendication 13 , caractérisée par le fait que les plans des miroirs de retournement (323a,323b) sont sensiblement perpendiculaires au plan du film (14), leurs traces dans le plan dudit film faisant sensiblement 45° avec l'axe longitudinal du film.

17 - Visionneuse selon la revendication 16, caractérisée par le fait que les traces dans le plan du film (14) des plans des quatrièmes miroirs (324a,324b) sont sensiblement perpendiculaires à l'axe du film, les faces réfléchissantes desdits quatrièmes miroirs faisant avec le plan du film (14) un angle de 135° environ.

18 - Visionneuse selon l'une des revendications 7 à 17, caractérisée par le fait que l'un au moins des deux premiers miroirs est monté à coulissement à l'intérieur d'une glissière pour être déplacé selon l'axe longitudinal du film (14) à examiner.

26

19 - Visionneuse selon l'une des revendications 1 à 18, caractérisée par le fait que, sur chaque chemin optique, on dispose un ensemble de lentilles multiplicateur de grossissement (326a, 326b, 327a, 327b).

20 - Visionneuse selon l'une des revendications 1 à 19, caractérisée par le fait que l'un au moins de ses miroirs-plans est monté pivotant autour d'une droite parallèle à son plan ou contenue dans son plan.

$$\underline{\text{FIG. 1}}$$

$$\underline{\text{FIG. 2}}$$

$$\underline{\text{FIG. 3}}$$

FIG. 4

FIG. 5

FIG. 6

FIG. 7

FIG. 8